# EUROPEAN PATENT APPLICATION

(11) **EP 2 961 143 A1**
(43) Date of publication of application: **30.12.2015**
(21) Application number: 15172395.4
(22) Date of filing: 16.06.2015
(51) Int. Cl.: H04M 1/725, G01C 21/36

(54) **METHOD TO DISPLAY CONTEXT DEPENDENT INFORMATION TO A USER IN OR FROM A VEHICLE**

(30) Priority: 26.06.2014 US 201414315856
(71) Applicant: BlackBerry Limited, Waterloo, ON N2K 0A7 (CA)
(72) Inventor: Vandeweerd, Sean, Mississauga, Ontario L4W 5P1 (CA); Nathwani, Sanjay, Mississauga, Ontario L4W 5P1 (CA)
(74) Representative: Roberts, Gwilym Vaughan

(57) **Abstract**

A method for a user electronic device to present information to a user. A status of a short range communication link between the user electronic device and a vehicle electronic device of a vehicle is monitored. When the user electronic device and the vehicle electronic device are connected, first data associated with the vehicle is retrieved from the vehicle electronic device. Dependent upon the first data, second data, including vehicle data, is retrieved. The second data is formatted in accordance with a messaging protocol of the vehicle electronic device and transmitted to the vehicle electronic device for presentation on a visual or audio interface of the vehicle electronic device. When the short range link is terminated, or at regular intervals, the location of the user electronic device may be stored to enable the vehicle to be located at a later time.

## Description

### BACKGROUND

Short range wireless communication between an automotive electronic device and a user electronic device may be used to enhance the functionality of the automotive electronic device. For example, in hands-free telephony, the device is use to provide a connection to a wireless telephone network. In audio streaming, the user electronic device provides access to media stored on the device itself or streamed from a remote source via a wireless wide area network.

Short range wireless communication can also be used to transfer messages, such as short message service (SMS) text messages or electronic mail (email), for presentation on a vehicle display.

It would be useful to provide a way to utilize messaging between an automotive electronic device and a user electronic device to enhance the capabilities of the user electronic device.

### BRIEF DESCRIPTION OF THE DRAWINGS

Exemplary embodiments of the present disclosure will be described below with reference to the included drawings such that like reference numerals refer to like elements and in which:
**FIG. 1** is a block diagram of a messaging system, in accordance with exemplary embodiments of the present disclosure;
**FIG. 2** is a flow chart of a method of operation of a messaging system, in accordance with exemplary embodiments of the present disclosure;
**FIG. 3** is a flow chart of a method of operation of a user electronic device in a messaging system, in accordance with exemplary embodiments of the present disclosure;
**FIG. 4** is a flow chart of a further method of operation of a user electronic device in a messaging system, in accordance with exemplary embodiments of the present disclosure; and
**FIG. 5** is a flow chart of a further method of operation of a messaging system, in accordance with exemplary embodiments of the present disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

In accordance with one exemplary aspect of the present disclosure, a user electronic device, such as a smartphone, handheld computer, laptop computer, tablet computer or wearable computer, or the like, connects with a vehicle electronic device, such as an in-vehicle information and entertainment system. The connection enables the user electronic device to recognize that it is operating within a vehicle, and it responds by retrieving information relevant to that operating context. The user electronic device may identify the vehicle and retrieve information associated with the vehicle from a remote server and present that information via an interface of the vehicle. The user electronic device may identify the location of the vehicle and retrieve location relevant data such as weather and traffic information for presentation. In one illustrative embodiment the user electronic devices monitors a status of a short range communication link between the user electronic device and a vehicle electronic device of the vehicle. When the user electronic device and the vehicle electronic device are connected via the short range communication link, the user electronic device retrieves first data associated with the vehicle from the vehicle electronic device via the short range communication link, identifies the vehicle using the first data, retrieves second data that is associated with the vehicle, formats the second data as a message and transmits the second data to the vehicle electronic device via the short range communication link. The second data is configured for presentation on a visual or audio interface of the vehicle electronic device. For example, the first data may identify the manufacturer of the vehicle. Based on this information, the user electronic device retrieves the second data from the manufacturer via a long range communication system. The second data could be, for example, vehicle service or recall information. The second data is formatted as a message and transmitted to the vehicle electronic device for presentation to the user. Thus, the user electronic device forms part of a messaging system for delivering vehicle related information to the vehicle user.

In accordance with an illustrative embodiment of the invention, a user electronic device is operable to send contextual information to a vehicle using vehicle messaging protocols (such as Message Access Profile) normally intended to communicate incoming or outgoing messages. This can be done on startup/shutdown, at regular intervals, or based on contextual triggers. These messages can be separated from normal messaging by defining a particular account to differentiate other message sources.

For example, when a user turns on their vehicle, they receive a summary of the day's current information (personal information, meetings, tasks, weather, notifications). When the user turns off the vehicle this system can be used in reverse. A vehicle can send contextual information from the vehicle to the device based on the same conditions and triggers.

In one example embodiment, when a user turns off a vehicle, the vehicle sends a message or notification to the user's device that includes the vehicle's location, fuel state, or other maintenance information. When maintenance intervals have been reached, a message is sent to the user electronic device informing the user to bring the vehicle in for service.

Currently, pushing notifications, messages, advertising or other types of messaging to a vehicle is not possible without a direct link to the vehicle itself, a wireless connection, and significant changes to the vehicle. Using a combination of technologies, notifications, messages, advertising or other messaging may be pushed over any network technology from a server to a vehicle using an intermediary device. By connecting the identification methods of a device and a vehicle, a message can be passed through to the vehicle and displayed using common vehicle messaging protocols (such as Message Access Profile). These messages can be made to persist on the device to be delivered later if coverage is not available at the time of connection to the vehicle, or for the purpose of regular notification.

For example, a vehicle dealer may wish to remind a customer that it is time to bring their vehicle in for service. In accordance with an embodiment of the disclosure, the dealer makes a request through a portal to a mobile infrastructure partner, such as a BLACKBERRY™ Device Configuration and Management Service, which pushes this information to a mobile device. This device then passes this message live to the vehicle display or at the next time the vehicle is started.

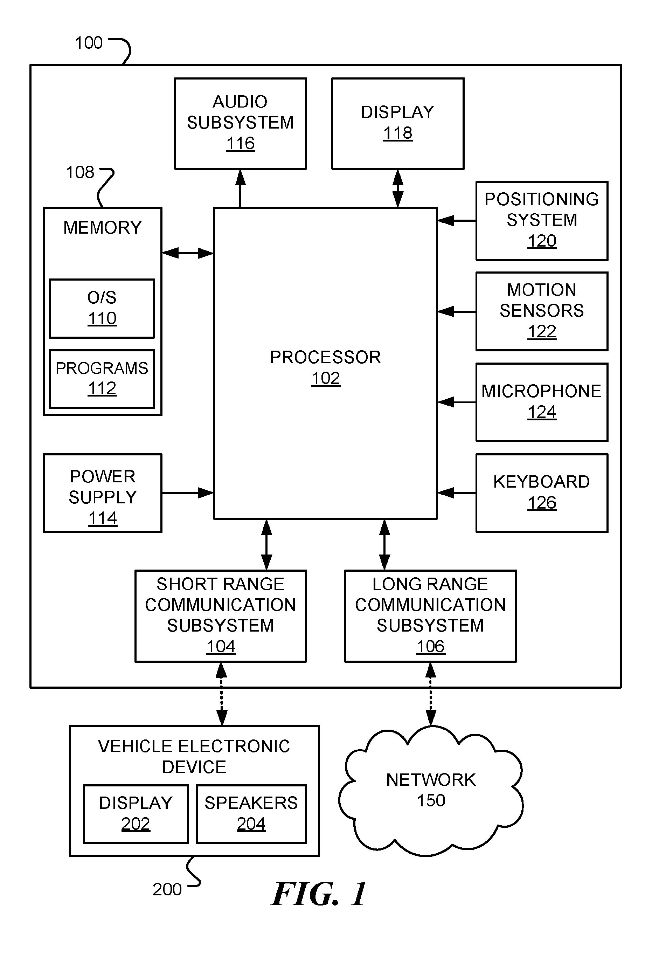

**FIG. 1** is a block diagram of a messaging system, in accordance with exemplary embodiments of the present disclosure. The messaging system includes user electronic device 100 that is operable to communicate with vehicle electronic device 200, via short range communication subsystem 104, and with network 150 via long range communication subsystem 106. The vehicle electronic device 200, which may be an information and entertainment system for example, includes a visual display 202 and audio speakers 204. The user electronic device 100 includes a processor 102 coupled to memory 108 that stores operating system 110, executable programs 112 and data. The user electronic device include a power supply 114 and various other components, such as clocks, common to portable electronic devices. In particular, the user electronic device 100 includes audio subsystem 116, and display 118 that may be used to present information to a user of the device. The display 118 may be a touch sensitive display that may be used to receive user inputs. In the embodiment shown, the user electronic device 100 includes positioning system 120 (such as a GPS) and motion and orientation sensors 122. User input interfaces, such as microphone 124 and keyboard 126 are also provided. The keyboard 126 may be a physical keyboard and/or a virtual keyboard displayed on display 118.

Short range communication subsystem 104 may utilize short range wireless communication technology, such as BLUETOOTH™ radio, which enables communication between electronic devices. BLUETOOTH™ technology enables fixed and user electronic devices to exchange data or form personal area networks using short-wavelength UHF radio waves. For example, a BLUETOOTH™ connection enables a smartphone or personal media player to communication with an electronic system in an automobile to provide hands-free telephony or audio streaming.

To ensure compatibility between devices, each BLUETOOTH™ enabled device conforms to a defined profile that specifies capabilities and communication protocol. For example, the Hands-Free Profile (HFP) enables speakerphone calling. After a brief pairing process, the vehicles audio speakers and a microphone hidden somewhere in the cabin take over the output and input of audio during calls while driving. The Advanced Audio Distribution Profile (A2DP) allows the connected car audio system to receive stereo audio from a connected Bluetooth phone. The same wireless connection that was used to carry voice data for the hands-free call can also be used to listen to music stored on a user electronic device, stream from an Internet radio service such as Pandora or Spotify, or listen to podcasts or audiobooks. A2DP operate alongside the Audio/Video Remote Control Profile (AVRCP), which enables the receiver to receive metadata from the connected phone and to actually control the playback. Metadata displayed usually includes artist, song, and album name. Audio controls manifest as simple play/pause and skip commands.

Text messaging (MAP) is a more recent Bluetooth standard. The Message Access Profile (MAP) gives a Bluetooth-connected receiver in a vehicle bi-directional access to short message service (SMS) messages on a user's mobile telephone. Incoming messages can be read aloud while driving. Additionally, some vehicle systems use MAP to enable the user to send a quick prepared response, such as "I'm busy driving right now, I'll call you back shortly" or "I'm stuck in traffic," with just a tap or two. The Message Access Profile (MAP) specification allows exchange of messages between devices and is commonly used for data exchange between automotive devices and mobile telephones. The MAP can be used, for example, to display text messages received by a mobile telephone on an in-vehicle display or enable the text messages to be read aloud using the in-vehicle audio system.

MAP supports the exchange of messages between paired devices and allows SMS, MMS, and email content to be read on a connected mobile device from the head unit. Typically, for a user electronic device, such as a smartphone, two accounts are available: a single aggregated SMS/MMS account tied to the device's phone number and a corporate/personal email account. Each of these accounts is entered into an accounts table in a messages database. The account ID is referenced when making any requests. To connect via MAP, a connect command is sent with the MAC address and the profile number (0x1134).

Another means for providing connectivity between a smartphone and the car information/entertainment system is MirrorLink™. In this approach a drivers may connect the smartphone to the car information/entertainment system with a cable and gain access to smartphone applications via the car's navigation screen and dashboard/steering-wheel buttons. MirrorLink is based on a set of well established, non-proprietary technologies. It uses standard Internet technologies (such as Internet Protocol) for compatibility with a wide range of devices. It also uses technologies already common in the car, such as Bluetooth™ and USB, and newly-introduced car technologies such as Wi-Fi as well. Universal Plug and Play (UPnP™) facilitates controlled access to applications.

It will be apparent to those of ordinary skill in the art that any known or future messaging system or connection protocol may be used. The second data is formatted in accordance with the messaging system or protocol of the vehicle electronic device.

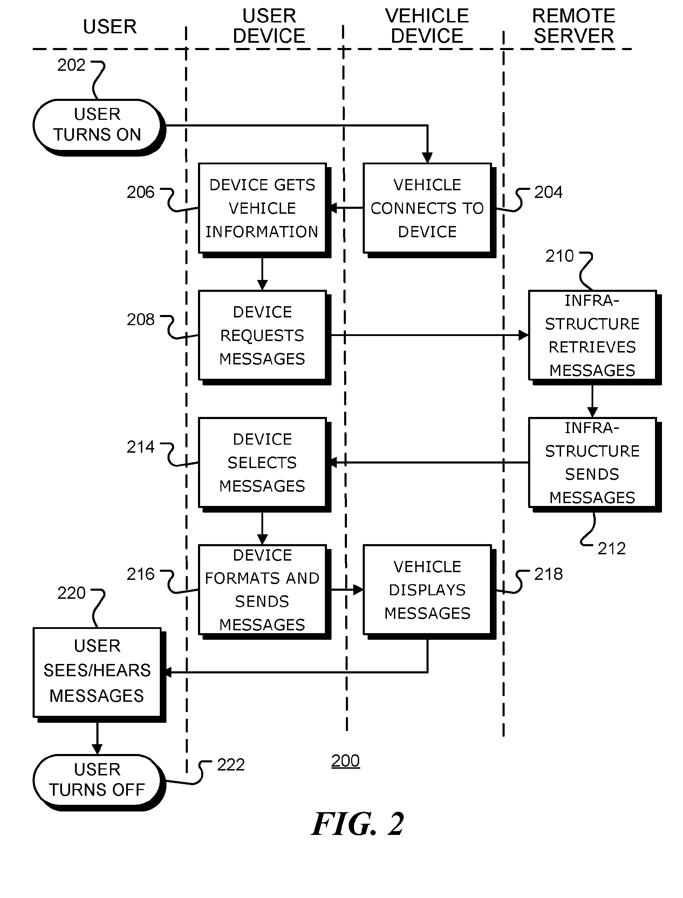

**FIG. 2** is a flow chart 200 of method of operation a messaging system, in accordance with exemplary embodiments of the present disclosure. The messaging system includes a user electronic device operated by a user, a vehicle device installed in vehicle, and network enabling connection to a remote server. Operation begins at start block 202 when the user turns on the vehicle or vehicle electronic device. At block 204 the vehicle electronic device connects to the user electronic device to establish a short range communication link. The connection protocol indicates the messaging capabilities of the vehicle electronic device. For example, the vehicle may indicate that it is MAP capable. At block 206, the user electronic device retrieves vehicle information from the vehicle electronic device. The vehicle information may include, for example, identifiers of the manufacturer of the vehicle, the make and model of the vehicle, a vehicle serial number, vehicle status such as miles driven or condition of monitored vehicle components. Based on the vehicle information, the user electronic device requests messages for the vehicle at block 208. The vehicle messages may be already stored on the user electronic device or may be requested from a remote server. The remote sever may be an intermediary server associated with the user electronic device, or another server, such as one operated by the manufacturer or vehicle service department. The messages are requested from a remote server via a long range communication system, such as a cellular telephone network. At block 210, the remote server retrieves messages for the vehicle and at block 212 the remote server sends the messages to the user electronic device via the long range communication system. At block 214, the user electronic device selects messages to be relayed to the vehicle electronic device. The message may include vehicle related massages in addition to user related messages, such as SMS messages, emails, personal information, calendar information, tasks and notifications, together with location specific messages such as weather and traffic conditions. At block 216 the messages are formatted and sent to the vehicle electronic device. At block 218 the messages are presented to the user via a visual or audio interface of the vehicle electronic device. The user hears or sees the messages at block 220 and the process terminates at block 222 when the user turns off the vehicle electronic device or the user electronic device. In this way, information including vehicle information, is presented to the user. The information may be presented when the vehicle is first turned on, at regular intervals, or upon user request.

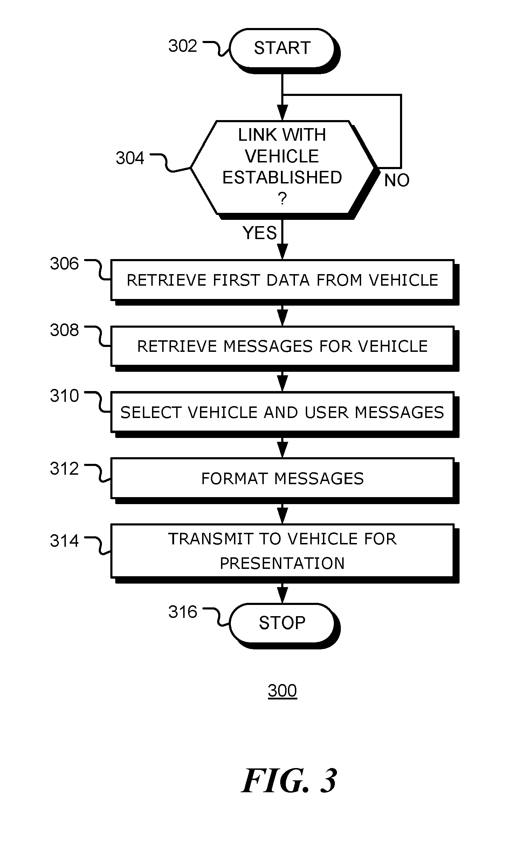

**FIG. 3** is a flow chart 300 of a method of operation of a user electronic device in a messaging system, in accordance with exemplary embodiments of the present disclosure. Following start block 302 in **FIG. 3****,** the user electronic device waits until a link with a vehicle electronic device has been established at decision block 304. When link is established, the user electronic device retrieves first data, including vehicle information, from the vehicle electronic device at block 306. The information may include the identity of the vehicle manufacturer or other vehicle information. At block 308, based on the received vehicle information, the user electronic device retrieves messages associated the vehicle or the vehicle status. The messages may be retrieved from a local memory or from a remote server via a long range communication system. At block 310, the user electronic device selects which vehicle and user messages are to be relayed to the vehicle electronic device. At block 314, the selected messages are formatted and transmitted to the vehicle electronic device for presentation by a visual or audio interface of the vehicle electronic device. The method terminates at block 316.

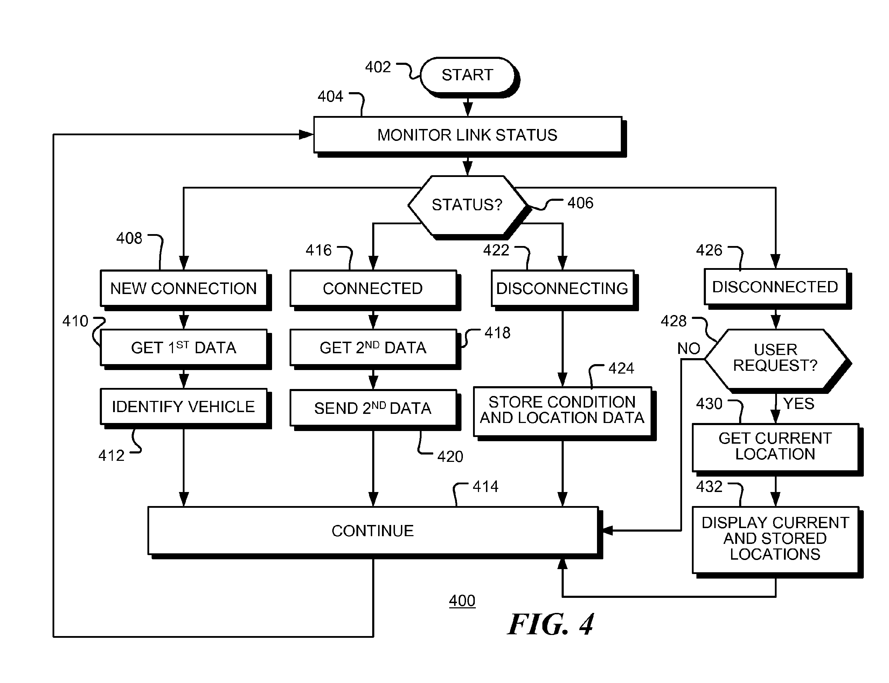

**FIG. 4** is a flow chart 400 of a further method of operation of a user electronic device in a messaging system, in accordance with exemplary embodiments of the present disclosure. Following start block 402, the status of a short range communication link with a vehicle electronic device is monitored. Continued operation is then determined dependent upon the connection status at decision block 406.

If the status is that a new connection has been formed, as indicated by block 408, the user electronic device determines the messaging capabilities of the vehicle electronic device and retrieves first data from the vehicle electronic device at block 410. The first data may include vehicle information such as vehicle make, model, serial number, vehicle condition, or vehicle status. The first data enables the vehicle to be identified at block 412 and the method continues to block 414, from where flow returns to block 404.

If the status is that a connection has been formed previously and is still in place, as indicated by block 416, the user electronic device retrieves, at block 418, second data to be sent to the vehicle electronic device. The second data may be retrieved from a memory of the user electronic device and/or vehicle-related messages may be retrieved from a remote server via a long range communication system. At block 420, the messages, which may include both vehicle related messages and messages to the user, are formatted in accordance with the identified messaging protocol and sent to the vehicle electronic device via the short range communication link. The method continues to block 414, from where flow returns to block 404.

If the status is that a connection is being terminated, as indicated by block 422, vehicle status information is stored in a memory of the user electronic device at block 424. The vehicle status information may include the location of vehicle as indicated by the user electronic device or the vehicle electronic device. The location may be obtained from a positioning system, such as a GPS for example. The status information may include vehicle condition information, such as fuel level, mileage, etc. The status and location information may be stored at regular intervals while the connection is maintained, or stored when a disconnection is detected. The method continues to block 414, from where flow returns to block 404.

If the status is that the short range connection is no longer in place, as indicated by block 426, the user electronic device operates independently from the vehicle electronic device. At decision block 428, it is determined if a user request has been received. If no user request has been received, as depicted by the negative branch from decision block 428, the method continues to block 414, from where flow returns to block 404. If a user request is received, as depicted by the positive branch from decision block 428, an application may be executed on the user electronic device to access and display the information stored at block 424. In the example shown, a current location of the user electronic device is retrieved at block 430. At block 432, the user electronic device displays to the user the current location and the location stored at block 424. This enables the user to determine where the vehicle was left and may indicate, via a displayed map and/compass, how to return to the vehicle. In contrast to prior techniques, no user action is required to store the vehicle location, thereby eliminating the possibility of a user forgetting to perform the required action.

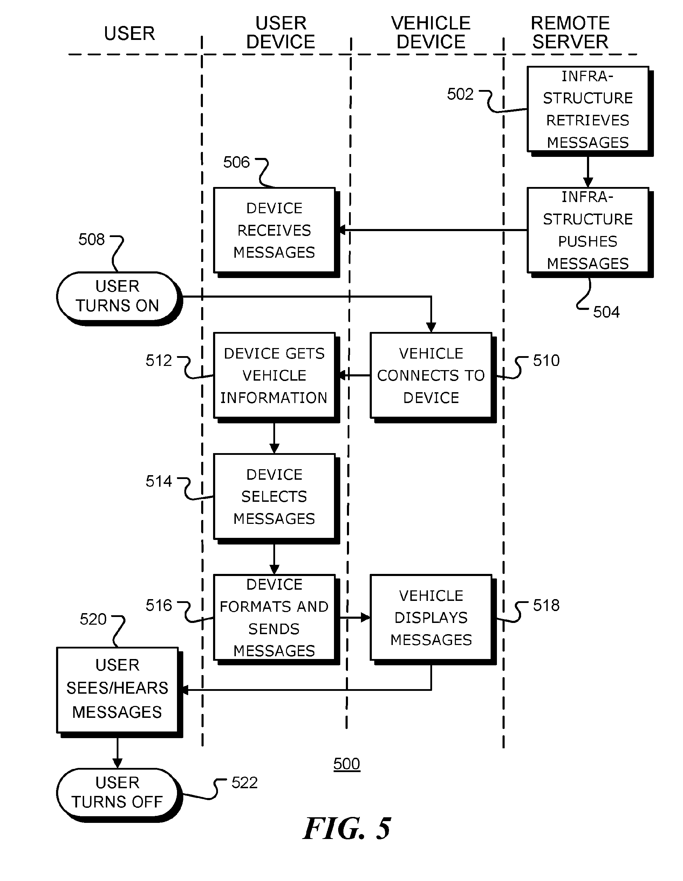

**FIG. 5** is a flow chart 500 of a further method of operation of a messaging system, in accordance with exemplary embodiments of the present disclosure. The messaging system includes a user electronic device operated by a user, a vehicle device installed in vehicle, and network enabling connection to a remote server. At block 502, the infra-structure of a long range communication system, such as cellular telephone network for example, retrieves or receives messages designated for a vehicle associated with a user of the network. The messages may be, for example, vehicle service messages, targeted advertisements, alerts, notifications or other types of messages. At block 504, the messages are sent to the user's electronic device via the long range communication system. The messages are received by the user electronic device at block 506. At block 508, the user turns on the vehicle electronic device. At block 510, the vehicle electronic device connects to the user electronic device to establish a short range communication link. The connection protocol indicates the messaging capabilities of the vehicle electronic device. For example, the vehicle may indicate that it is MAP capable. At block 512, the user electronic device retrieves vehicle information from the vehicle electronic device. The vehicle information may include, for example, identifiers or the manufacturer of the vehicle, the make and model of the vehicle, a vehicle serial number, vehicle status such as miles driven or the condition of monitored vehicle components. Based on the vehicle information, the user electronic device selects messages associated with the identified vehicle at block 514. The vehicle messages may be aggregated with user messages, such as SMS messages, emails, personal information, meetings, tasks and notifications, and general messages such as weather and traffic conditions. At block 516, the messages are formatted and sent to the vehicle electronic device. At block 518, the messages are presented to the user via a visual or audio interface of the vehicle electronic device. The user hears or sees the messages at block 520 and the process terminates at block 522, when the user turns off the vehicle electronic device or the user electronic device. In this way, information including information associated with the vehicle, is presented to the user. The information may be presented when the vehicle is first turned on, at regular intervals, or upon user request.

The messages may be pushed to the user electronic device before or after the vehicle electronic device is turned on. If the messages are received before start-up, the messages may be presented when start-up occurs. If the messages are received after start-up, the messages may be presented immediately, at intervals, or upon user request.

In this way, operation of the user electronic device is dependent upon the status of the connection with the vehicle, and enables both user and vehicle information to be presented dependent upon the operating context.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described exemplary embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

Aspects and features of the present disclosure are set out in the following numbered clauses:
1. A method for a user electronic device to present information, the method comprising:
   monitoring a status of a short range communication link between the user electronic device and a vehicle electronic device of a vehicle;
   when the user electronic device and the vehicle electronic device are connected via the short range communication link:
      retrieving first data associated with the vehicle from the vehicle electronic device via the short range communication link;
      dependent upon the first data, retrieving second data including vehicle data associated with the vehicle;
      formatting the second data in accordance with a messaging protocol of the vehicle; and
      transmitting the formatted second data to the vehicle electronic device via the short range communication link, where the second data is configured for presentation on a visual or audio interface of the vehicle electronic device.
2. The method of clause 1, where retrieving the second data comprises aggregating the vehicle data with one or more user messages.
3. The method of clause 2, wherein the one or more user messages comprise one or more email and/or SMS messages.
4. The method of clause 1, where retrieving the second data comprises:
   requesting the second data from a remote source via a long range communication network to the user electronic device; and
   receiving the second data from the remote source via the long range communication network to the user electronic device.
5. The method of clause 4, wherein the first data comprises data indicative of a manufacturer of the vehicle and wherein the remote source comprises a server, the method further comprising:
   selecting the server dependent upon the manufacturer of the vehicle.
6. The method of clause 4, wherein the remote source comprises an infrastructure server of the long range communication network.
7. The method of clause 1, wherein the short range communication link comprises a wireless link.
8. The method of clause 1, wherein the short range communication link comprises BLUETOOTHTM radio link and wherein the vehicle messaging protocol operates in accordance with a Message Access Profile.
9. The method of clause 1, wherein the short range communication link is operable in accordance with a MIRRORLINKTM protocol.
11. The method of clause 1, further comprising the user electronic device presenting the first data on a visual or audio interface of the user electronic device.
12. The method of clause 1, further comprising:
   when the short range communication link between the user electronic device and the vehicle electronic device is to be terminated:
      the user electronic device receiving and storing first location data of the vehicle electronic device; and
      responsive to a user request:
         displaying the first location data and a current location of the user electronic device on a display of the user electronic device.
13. The method of clause 1, further comprising:
   when the short range communication link between the user electronic device and the vehicle electronic device is terminated:
      the user electronic device storing first location data of the user electronic device, and
      responsive to a user request received subsequent to termination of the short range communication link:
         displaying the first location data and a current location of the user electronic device on a display of the user electronic device.
14. The method of clause 1, where the first data includes vehicle condition data, the method further comprising:
   presenting the vehicle condition data on a display of the user electronic device.
15. The method of clause 1, wherein retrieving the second data comprises retrieving data pushed to the user electronic device by an infrastructure server of a long range wireless network.
16. A method for a user electronic device to present information, the method comprising:
   at a first time when a short range wireless link is established with a vehicle electronic device of a vehicle:
      retrieving and storing first data associated with the vehicle;
      at a second time when the short range wireless link with the vehicle electronic device of a vehicle is terminated:
         retrieving and storing second data associated with the user electronic device;
         executing an application on the user electronic device dependent upon the first and second data to provide third data; and
         presenting the third data.
17. The method of clause 16, wherein presenting the third data comprises presenting the third data on a graphical or audio user interface of the user electronic device.
18. The method of clause 16, wherein first data associated with the vehicle comprises vehicle condition information.
19. The method of clause 16, wherein second data comprises data indicative of a location of the user electronic device at the second time, the method further comprising:
   responsive to a user request at a third time, subsequent to the second time, displaying, on map presented on a display of the user electronic device, a current location of the user electronic device and the location of the user electronic device at the second time.
20. A non-transitory computer-readable medium having computer-executable instructions that, when executed by a processor of a user electronic device, cause the handheld to perform a method comprising:
   monitoring a status of a short range communication link between the user electronic device and a vehicle electronic device of a vehicle;
   when the user electronic device and the vehicle electronic device are connected via the short range communication link:
      retrieving first data associated with the vehicle from the vehicle electronic device via the short range communication link;
      dependent upon the first data, retrieving second data including vehicle data associated with the vehicle;
      formatting the second data in accordance with a messaging protocol of the vehicle; and
      transmitting the formatted second data to the vehicle electronic device via the short range communication link, where the second data is configured for presentation on a visual or audio interface of the vehicle electronic device.
21. The non-transitory computer-readable medium of clause 20, where retrieving the second data comprises:
   requesting the second data from a remote source via a long range communication network to the user electronic device; and
   receiving the second data from the remote source via the long range communication connection to the user electronic device.
22. The non-transitory computer-readable medium of clause 20, where retrieving the second data comprises retrieving data pushed to the user electronic device via the long range communication network.

## Claims

1. A method for a user electronic device to present information, the method comprising:
monitoring a status of a short range communication link between the user electronic device and a vehicle electronic device of a vehicle;
when the user electronic device and the vehicle electronic device are connected via the short range communication link:
retrieving first data associated with the vehicle from the vehicle electronic device via the short range communication link;
dependent upon the first data, retrieving second data including vehicle data associated with the vehicle;
formatting the second data in accordance with a messaging protocol of the vehicle; and
transmitting the formatted second data to the vehicle electronic device via the short range communication link, where the second data is configured for presentation on a visual or audio interface of the vehicle electronic device.

2. The method of claim 1, where retrieving the second data comprises aggregating the vehicle data with one or more user messages, for examplewherein the one or more user messages comprise one or more email and/or SMS messages.

3. The method of claim 1, where retrieving the second data comprises:
requesting the second data from a remote source via a long range communication network to the user electronic device; and
receiving the second data from the remote source via the long range communication network to the user electronic device.

4. The method of claim 3, wherein the first data comprises data indicative of a manufacturer of the vehicle and wherein the remote source comprises a server, the method further comprising:
selecting the server dependent upon the manufacturer of the vehicle, or wherein the remote source comprises an infrastructure server of the long range communication network.

5. The method of claim 1, wherein the short range communication link comprises a wireless link, or
wherein the short range communication link comprises BLUETOOTH™ radio link and wherein the vehicle messaging protocol operates in accordance with a Message Access Profile, or
wherein the short range communication link is operable in accordance with a MIRRORLINK™ protocol.

6. The method of claim 1, further comprising the user electronic device presenting the first data on a visual or audio interface of the user electronic device.

7. The method of claim 1, further comprising:
when the short range communication link between the user electronic device and the vehicle electronic device is to be terminated:
the user electronic device receiving and storing first location data of
the vehicle electronic device; and
responsive to a user request:
displaying the first location data and a current location of the user electronic device on a display of the user electronic device.

8. The method of claim 1, further comprising:
when the short range communication link between the user electronic device and the vehicle electronic device is terminated:
the user electronic device storing first location data of the user
electronic device, and
responsive to a user request received subsequent to termination of the short range communication link:
displaying the first location data and a current location of the user electronic device on a display of the user electronic device.

9. The method of claim 1, where the first data includes vehicle condition data, the method further comprising:
presenting the vehicle condition data on a display of the user electronic device.

10. The method of claim 1, wherein retrieving the second data comprises retrieving data pushed to the user electronic device by an infrastructure server of a long range wireless network.

11. A method for a user electronic device to present information, the method comprising:
at a first time when a short range wireless link is established with a vehicle electronic device of a vehicle:
retrieving and storing first data associated with the vehicle;
at a second time when the short range wireless link with the vehicle electronic device of a vehicle is terminated:
retrieving and storing second data associated with the user electronic device;
executing an application on the user electronic device dependent upon the first and second data to provide third data; and presenting the third data.

12. The method of claim 11, wherein presenting the third data comprises presenting the third data on a graphical or audio user interface of the user electronic device.

13. The method of claim 11, wherein first data associated with the vehicle comprises vehicle condition information, or
wherein second data comprises data indicative of a location of the user electronic device at the second time, the method further comprising:
responsive to a user request at a third time, subsequent to the second time, displaying, on map presented on a display of the user electronic device, a current location of the user electronic device and the location of the user electronic device at the second time.

14. A non-transitory computer-readable medium having computer-executable instructions that, when executed by a processor of a user electronic device, cause the handheld to perform the method of any of claims 1 to 13.
